# EUROPÄISCHE PATENTANMELDUNG

(11) **EP 1 072 760 A1**
(43) Veröffentlichungstag der Anmeldung: **31.01.2001**
(21) Anmeldenummer: 99810689.2
(22) Anmeldetag: 30.07.1999
(51) Int. Cl.: F01K 23/10

(54) **Verfahren zum Hochfahren eines Kombikraftwerkes sowie Kombikraftwerk zur Durchführung des Verfahrens**

(71) Anmelder: ABB ALSTOM POWER (Schweiz) AG, 5401 Baden (CH)
(72) Erfinder: Blatter, Richard, 5408 Ennetbaden (CH); Bachmann, Rolf, 5312 Döttingen (CH); Elkuch, Phillip, 9490 Vaduz (LI); Müller, Peter, 8115 Hüttikon (CH)

(57) **Zusammenfassung**

Bei einem Verfahren zum Hochfahren eines Kombikraftwerkes (30), welches wenigstens eine Gasturbine (11) und eine Dampfturbine (13) umfasst, wobei mittels der heissen Abgase der Gasturbine (11) in einem Abhitzekessel (16) Frischdampf für den Betrieb der Dampfturbine (13) erzeugt und der Dampfturbine (13) zugeleitet und überschüssiger Frischdampf über einen steuerbaren Bypass (24, 25) an der Dampfturbine (13) vorbei direkt zu einem Kondenser (26) geleitet wird, wird eine kostengünstige und umweltfreundliche Fahrweise beim Start dadurch erreicht, dass zur Verringerung des über den Bypass (24, 25) strömenden Dampfüberschusses die Gasturbine (11) zunächst auf ihre Minimallast hochgefahren wird, und dass die Gasturbine (11) anschliessend mit einem Lastgradienten weiter hochgefahren wird, welcher durch Zustandsgrössen der Dampfturbine (13) bestimmt wird.

## Beschreibung

### TECHNISCHES GEBIET

Die vorliegende Erfindung bezieht sich auf das Gebiet der Kombikraftwerke. Sie betrifft ein Verfahren zum Hochfahren eines Kombikraftwerkes gemäss dem Oberbegriff des Anspruchs 1 sowie ein Kombikraftwerk zur Durchführung des Verfahrens.

### STAND DER TECHNIK

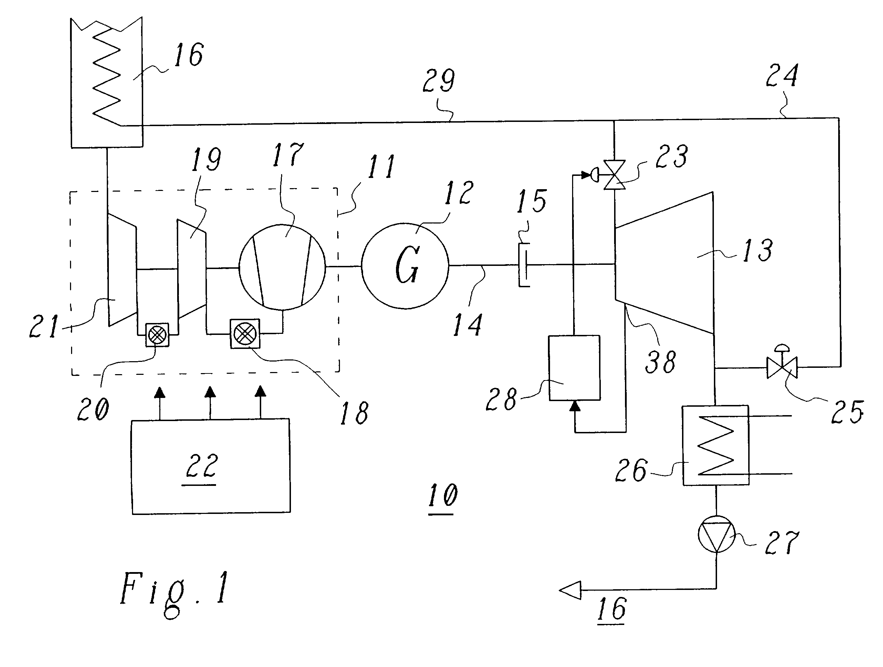

Ein Kombikraftwerk bzw. eine Kombianlage der bekannten Art ist in Fig. 1 in einem Ausschnitt schematisch anhand eines Anlagenplans dargestellt. Das Kombikraftwerk 10 umfasst eine Gasturbine 11 und eine Dampfturbine 13, die beide gemeinsam einen Generator 12 antreiben. Die Gasturbine 11 ist über eine Welle 14 direkt mit dem Generator 12 verbunden, die Dampfturbine 13 dagegen über eine zwischenliegende Kupplung 15. Die Anlage kann selbstverständlich aber auch als Mehrwellenanlage ausgebildet sein. Die Gasturbine 11 ist im dargestellten Beispiel mit einer sequentiellen Verbrennung ausgestattet, bei der zwei Brennkammern 18 und 20 hintereinander angeordnet sind. Die Verbrennungsluft wird durch einen Kompressor 17 angesaugt und verdichtet und in einer ersten Brennkammer 18 mit (flüssigem und/oder gasförmigem) Brennstoff vermischt und verbrannt. Die heissen Verbrennungsgase treiben eine erste Turbinenstufe 19 an. In die heissen Abgase der ersten Turbinenstufe wird in einer zweiten Brennkammer 20 wiederum Brennstoff und/oder ein Brennstoff/Luft-Gemisch eingedüst und zur Zündung gebracht. Die Verbrennungsgase der Zweiten Brennkammer 20 treiben eine zweite Turbinenstufe 21.

Nach dem Verlassen der Gasturbine 11 werden die heissen Abgase dazu verwendet, mittels eines an sich bekannten Abhitzekessels (heat recovery steam generator HRSG) 16, der in Fig. 1 nur teilweise dargestellt ist und Teil eines Wasser/Dampfkreislaufes ist, Frischdampf für die Dampfturbine 13 zu erzeugen. Der Frischdampf aus dem Ueberhitzer des Abhitzekessels 16 wird über eine Frischdampfleitung 29 zur Dampfturbine 13 geführt, wo er - je nach Stellung eines Frischdampfventils 23 und eines in einer Bypassleitung 24 angeordneten Bypassventils 25 - teils zum Antreiben der Dampfturbine 13 verwendet wird und teils über die Bypassleitung 24 an der Dampfturbine 13 vorbei direkt einem Kondenser 26 zugeführt wird. Der aus der Dampfturbine 13 austretenden und über die Bypassleitung 24 strömende Dampf wird in dem Kondenser 26 kondensiert und das Kondensat mittels einer Kondensatpumpe 27 zum Abhitzekessel 16 zurückgepumpt.

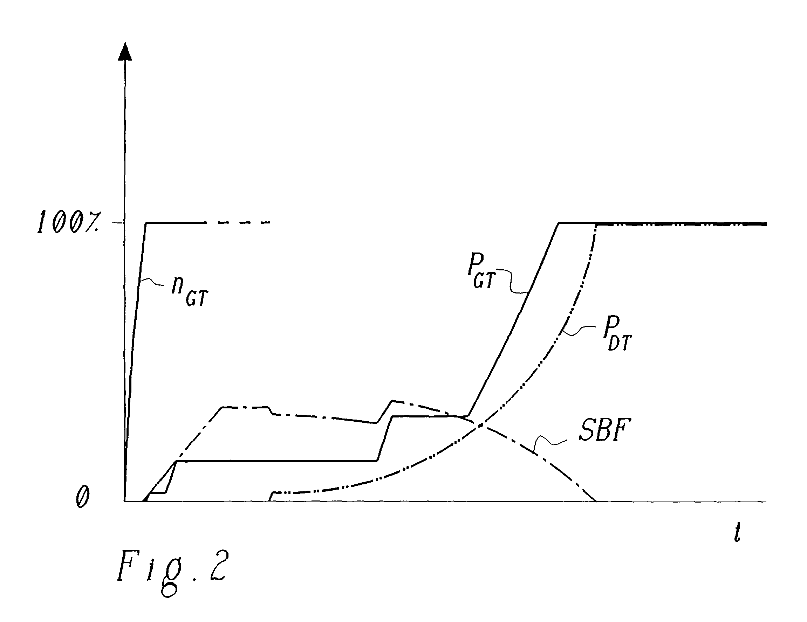

Das Hochfahren der Kombianlage aus Fig. 1 erfordert das Hochfahren sowohl der Dampfturbine 13 als auch der Gasturbine 11. Für das Hochfahren der Dampfturbine ist ein Hochfahrautomat 28 (z.B. vom Typ TURBOTROL/TURBOMAX der Anmelderin) vorgesehen, der eingangsseitig mit einer Flanschtemperaturmessung 38 an der Dampfturbine 13 verbunden ist und ausgangsseitig ein Leistungssteigerungssignal zur Steuerung des Frischdampfventils 23 abgibt. Für das Hochfahren der Gasturbine 11 ist eine Steuerung 22 vorgesehen, welche die Gasturbine 11 jeweils mit einem für die Gasturbine 11 charakteristischen Lastgradienten sukzessive auf bestimmte Haltepunkte hochfährt (siehe Fig. 2).

Kombianlagen gemäss Fig. 1 werden hochgefahren, indem zunächst die Gasturbine 11 angefahren wird (Kurve der Drehzahl n_{GT} in Fig. 2), der Wasser/Dampfkreislauf und der Abhitzekessel 16 angewärmt werden, und dann die Dampfturbine 13 angestossen und belastet wird. Die Dampfmenge, die nicht von der Dampfturbine 13 geschluckt werden kann, wird über den Bypass 24, 25 in den Kondenser 26 verworfen. Bei Kaltstart und Warmstart der Anlage wird die Gasturbine 11 bis zu einem Haltepunkt belastet (waagerechte Niveaus der durchgezogenen Kurve der Gasturbinenleistung PGT in Fig. 2), um genügend Dampfüberschuss für die Dampfturbine 13 zu produzieren. Sobald die Dampfturbine 13 mehr Dampf schlucken kann, wird die Gasturbine 11 auf Vollast hochgefahren und zieht die Dampfturbine 13 mit sich (strichpunktierte Kurve der Dampfturbinenleistung PDT in Fig. 2), wobei immer ein Dampfüberschuss in den Kondenser 26 verworfen wird (strichlierte Kurve des Dampfbypass-Massenstroms SBF (steam bypass flow) in Fig. 2).

Nachteilig ist dabei, dass die Dampfmenge, die über den Bypass 24, 25 in den Kondenser 26 verworfen wird, Brennstoffenergie darstellt, welche zwar in Dampf umgewandelt, dann aber ungenutzt verworfen wird.

### DARSTELLUNG DER ERFINDUNG

Es ist daher Aufgabe der Erfindung, eine Verfahren zum Hochfahren einer Kombianlage anzugeben, welches sich einfach realisieren lässt und zur Folge hat, dass wenig oder gar kein Dampf mehr verworfen werden muss.

Die Aufgabe wird durch die Gesamtheit der Merkmale des Anspruchs 1 gelöst. Der Kern der Erfindung besteht darin, die Gasturbine nicht mehr auf einen festen Haltepunkt zu fahren und dann mit dem ihr eigenen Gasturbinen-Lastgradienten hochzufahren, sondern die Gasturbine zunächst auf ihre Minimallast zu fahren und dann mit einem Lastgradienten hochzufahren, der sich nach den Zustandsgrössen der Dampfturbine richtet.

Eine erste bevorzugte Ausführungsform des Verfahrens nach der Erfindung ist dadurch gekennzeichnet, dass die Dampfturbine mittels eines Hochfahrautomaten hochgefahren wird, welcher nach Massgabe des jeweiligen Belastungszustandes bzw. Belastungsgradienten der Dampfturbine ein Leistungssteigerungssignal ΔP_{DT} für die Dampfturbine abgibt, dass aus dem Leistungssteigerungssignal ΔP_{DT} die für die Leistungssteigerung erforderliche zusätzliche Dampfmenge Δm abgeleitet wird, dass aus der bestimmten zusätzlichen Dampfmenge Δm ein für deren Erzeugung erforderliches Leistungssteigerungssignal ΔP_{GT} der Gasturbine abgeleitet wird, und dass die Gasturbine nach Massgabe dieses Gasturbinen-Leistungssteigerungssignals ΔP_{GT} hochgefahren wird. Hierdurch wird die Leistung der Gasturbine jeweils eng an der Leistung der Dampfturbine entlanggeführt, so dass nur sehr wenig überschüssiger Dampf verworfen werden muss.

Eine bevorzugte Weiterbildung dieser Ausführungsform zeichnet sich dadurch aus, dass beim Hochfahren der Gasturbine vorhandene Druckbegrenzungen für den Abhitzekessel und/oder Temperaturbegrenzungen für den Abhitzekessel und/oder die Dampfturbine berücksichtigt werden, und dass die für die vorliegenden Dampfdaten erforderlichen optimalen Abgastemperaturen und Abgas-Massenströme der Gasturbine sowohl durch die Steuerung der Brennstoffmenge zur Brennkammer bzw. den Brennkammern der Gasturbine als auch durch die Beeinflussung der Leitschaufelstellung der Gasturbine eingestellt werden.

Eine andere bevorzugte Weiterbildung ist dadurch gekennzeichnet, dass zusätzlich die Stellung des Bypass für die Feinsteuerung der Gasturbine verwendet wird, wobei die Feinsteuerung der Gasturbine so erfolgt, dass das im Bypass angeordnetes Bypassventil stets eine minimale Oeffnung aufweist.

Eine andere Weiterbildung zeichnet sich dadurch aus, dass der Bypass geschlossen gehalten wird, und dass die Steuerung der Gasturbine entlang einem Sollverlauf nach Massgabe des Frischdampfdruckes erfolgt.

Eine zweite bevorzugte Ausführungsform der Erfindung ist dadurch gekennzeichnet, dass die Dampfturbine mittels eines Hochfahrautomaten hochgefahren wird, welcher nach Massgabe des jeweiligen Belastungszustandes bzw. Belastungsgradienten der Dampfturbine ein Leistungssteigerungssignal ΔP_{DT} für die Dampfturbine abgibt, und dass die Gasturbine nur entsprechend der Stellung des Bypass belastet wird, wobei das im Bypass angeordnete Bypassventil stets eine minimale Oeffnung aufweist.

Bei einer dritten bevorzugten Ausführungsform des erfindungsgemässen Verfahrens wird die Dampfturbine mittels eines Hochfahrautomaten hochgefahren, welcher nach Massgabe des jeweiligen Belastungszustandes bzw. Belastungsgradienten der Dampfturbine ein Leistungssteigerungssignal ΔP_{DT} für die Dampfturbine abgibt, und erfolgt die Steuerung der Gasturbine entlang einem Sollverlauf nach Massgabe des Frischdampfdruckes.

Eine vierte bevorzugte Ausführungsform ist dadurch gekennzeichnet, dass vor dem Start der Dampfturbine eine Zustandsgrösse, insbesondere die Flanschtemperatur, der Dampfturbine gemessen wird, und dass die Gasturbine nach Massgabe dieser Zustandsgrösse entlang einer solchen vorgegebenen Belastungskurve hochgefahren wird, dass die Dampfturbine von den Anfahrspannungen her nicht überlastet wird und der gesamte Frischdampf von der Dampfturbine geschluckt wird.

Das erfindungsgemässe Kombikraftwerk zur Durchführung des Verfahrens nach der Erfindung ist dadurch gekennzeichnet, dass für das Hochfahren bzw. den Betrieb der Gasturbine eine Steuerung vorgesehen ist, dass erste Mittel zur Messung und Auswertung von Zustandsgrössen der Dampfturbine und/oder des mit der Dampfturbine verbundenen Dampfkreislaufes vorgesehen sind, und dass die Steuerung der Gasturbine eingangsseitig mit den Mess- und Auswertemitteln in Wirkverbindung steht.

Eine bevorzugte Ausführungsform des Kombikraftwerks nach der Erfindung zeichnet sich dadurch aus, dass die ersten Mess- und Auswertemittel einen Hochfahrautomaten für die Dampfturbine umfassen, auf welchen eingangsseitig als Zustandsgrösse die Flanschtemperatur der Dampfturbine gegeben wird, und welcher ausgangsseitig ein Leistungssteigerungssignal ΔP_{DT} für die Dampfturbine abgibt, und dass der Ausgang des Hochfahrautomaten über Funktionsblöcke mit dem Eingang der Gasturbinen-Steuerung verbunden ist, welche Funktionsblöcke dem Leistungssteigerungssignal ΔP_{DT} für die Dampfturbine nach vorgegebenen Funktionen ein entsprechendes Leistungssteigerungssignal ΔP_{GT} für die Gasturbine zuordnen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: die ausschnittweise schematische Darstellung eines Kombikraftwerkes (einer Kombianlage) nach dem Stand der Technik;
- Fig. 2: eine Diagramm der Hochfahrkurven für die Gasturbine und die Dampfturbine beim herkömmlichen Hochfahren einer Anlage nach Fig.1;
- Fig. 3: die zu Fig. 2 vergleichbaren Kurven, wie sie sich beispielhaft für ein Hochfahrverfahren gemäss der Erfindung ergeben;
- Fig. 4: eine zu Fig. 1 vergleichbarer Anlagenplan für eine Kombianlage gemäss einem ersten bevorzugten Ausführungsbeispiel der Erfindung mit einer Verknüpfung der Steuerungen von Dampfturbine und Gasturbine über Funktionsblöcke;
- Fig. 5: ein von Fig. 4 dahingehend abweichendes Ausführungsbeispiel , dass die Gasturbinen-Steuerung zusätzlich mit dem Ventilhub eines Bypassventils als Eingangsgrösse beaufschlagt wird;
- Fig. 6: ein anderes Ausführungsbeispiel, bei welchem die Gasturbinen-Steuerung nur mit dem Ventilhub eines Bypassventils als Eingangsgrösse beaufschlagt wird;
- Fig. 7: ein von Fig. 4 dahingehend abweichendes Ausführungsbeispiel, dass die Gasturbinen-Steuerung zusätzlich mit dem Druck in der Bypassleitung bzw. dem Druck des Frischdampfes als Eingangsgrösse beaufschlagt wird;
- Fig. 8: ein zu Fig. 6 vergleichbares Ausführungsbeispiel, bei dem die Gasturbinen-Steuerung nur mit dem Druck in der Bypassleitung bzw. dem Druck des Frischdampfes als Eingangsgrösse beaufschlagt wird; und
- Fig. 9: ein anders Ausführungsbeispiel, bei welchem aus der Flanschtemperaturmessung an der Dampfturbine vor dem Anfahren eine angepasste Hochfahrkurve für die Gasturbine abgeleitet und zur Steuerung der Gasturbine verwendet wird.

In allen Ausführungsbeispielen ist ein Kombikraftwerk in Einwellenbauart dargestellt, bei dem eine Gasturbine und eine Dampfturbine auf einen gemeinsamen Generator wirken. Weiterhin ist in allen Prinzipskizzen eine Gasturbine mit sequentieller Verbrennung gezeigt. Selbstverständlich ist diese Bauart nicht erfindungswesentlich. Die Erfindung kann problemlos auch mit einer abweichenden Anordnung von Gasturbine und Dampfturbine realisiert werden, und mit einer beliebigen Gasturbinen-Bauart. Im Rahmen der nicht einschränkenden Ausführungsbeispiele ist die Erfindung jedoch in Verbindung mit modernster Anlagentechnologie dargestellt.

### WEGE ZUR AUSFÜHRUNG DER ERFINDUNG

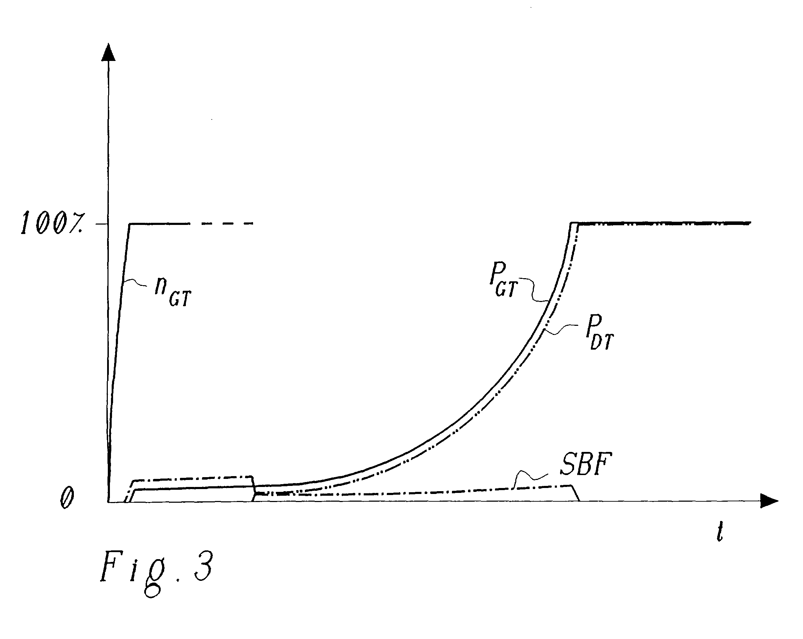

Die Lösung gemäss der Erfindung führt zu einem beispielhaften Diagramm, das in Fig. 3 wiedergegeben ist und mit dem Diagramm aus Fig. 2 verglichen werden kann. Durch das erfindungsgemässe Verfahren wird die Leistung P_{GT} der Gasturbine zunächst auf Minimallast gefahren und dann entlang einer Kurve hochgefahren, die sich eng an die zugehörige Kurve für die Leistung P_{DT} der Dampfturbine anschmiegt. Dadurch reduziert sich der Dampfbypass-Massenstrom SBF auf ein Minimum, was die Effizienz der Anlage deutlich steigert.

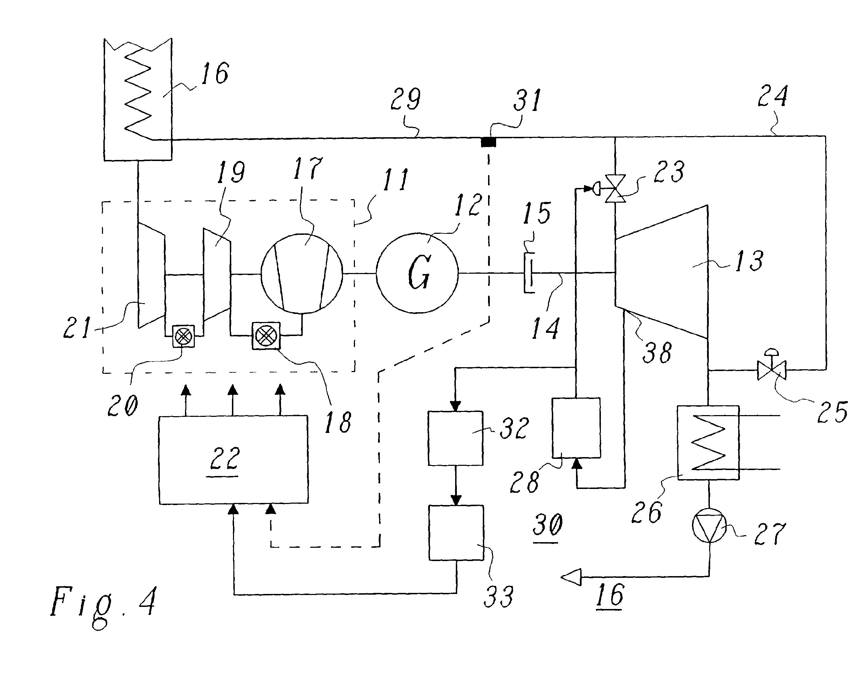

Die Beeinflussung des für das Hochfahren der Gasturbine massgeblichen Lastgradient durch die Zustandsgrössen der Dampfturbine bzw. des Wasser/Dampfkreislaufes kann im Rahmen der Erfindung gemäss den Fig. 4 bis 9 auf verschiedene Weise erfolgen (gleiche Anlagenteile sind dabei stets mit denselben Bezugszeichen versehen, die auch in Fig. 1 verwendet worden sind):

Bei einer ersten Realisierung gemäss Fig. 4 erhält in dem Kombikraftwerk 30 die Steuerung 22 der Gasturbine 11 vom Hochfahrautomaten 28 der Dampfturbine 13 ein Signal. Dabei wird durch einen ersten Funktionsblock 32 dem Leistungssteigerungssignal ΔP_{DT} Dampfturbine 13 aus dem Hochfahrautomaten 28 die für die Leistungssteigerung erforderliche zusätzliche Dampfmenge Δm zugeordnet, und in einem zweiten Funktionsblock 33 der bestimmten zusätzlichen Dampfmenge Δm ein für deren Erzeugung erforderliches Leistungssteigerungssignal ΔP_{GT} der Gasturbine 11 zugeordnet, das dann zur Steuerung 22 gelangt. Beide Funktionsblöcke 32, 33 können durch einen einfachen Rechner verwirklicht werden. Zusätzlich können beim Hochfahren der Gasturbine 11 auch Temperatur- und Druckbegrenzungen im Abhitzekessel 16 und Temperaturbegrenzungen der Dampfturbine 13 berücksichtigt werden, wobei die für die vorliegenden Dampfdaten erforderlichen optimalen Abgastemperaturen und Abgas-Massenströme der Gasturbine 11 sowohl durch die Steuerung der Brennstoffmenge als auch durch die Beeinflussung der Leitschaufelstellung der Gasturbine 11 eingestellt werden. So ist es gemäss Fig. 4 denkbar, die Temperatur des Frischdampfes in der Frischdampfleitung 29 mittels eines Temperaturaufnehmers 31 zu messen, und die gemessenen Temperaturwerte auf die Gasturbinen-Steuerung 22 zu geben (gestrichelte Leitung in Fig. 4). Weiterhin können beim Hochfahren der Gasturbine auch die Zeit und die Dampfmenge berücksichtigt werden, die nötig sind, um den Kondenser 26 zu evakuieren.

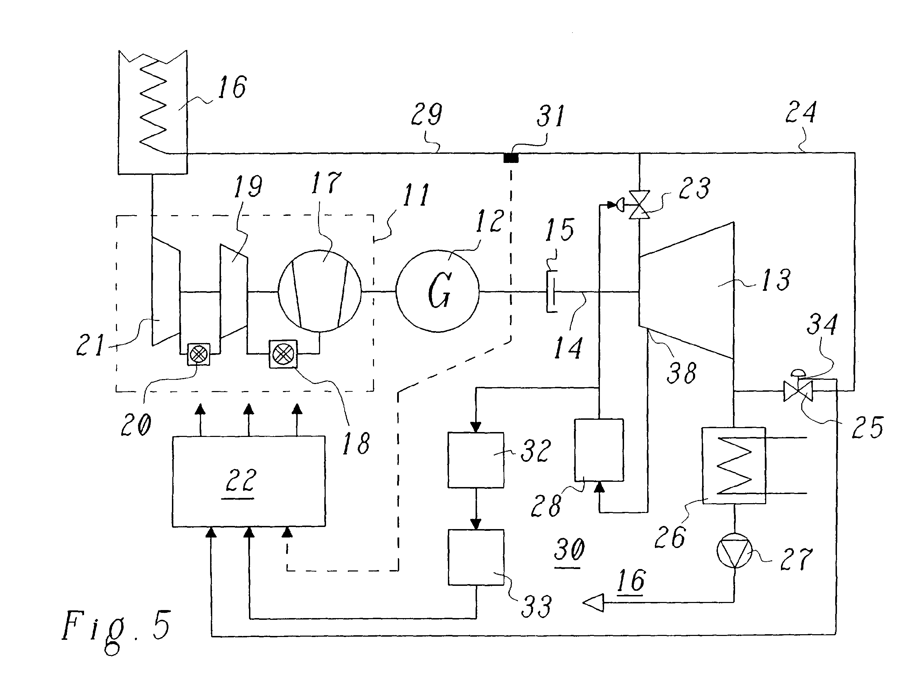

Bei einer zweiten Realisierung der Erfindung gemäss Fig. 5 erfolgt die Kopplung der Dampfturbine 13 und der Gasturbine 11 über den Hochfahrautomaten 28 und die Funktionsblöcke 32 und 33 in gleicher Weise wie in Fig. 4. Im Unterschied dazu wird jedoch zusätzlich die Stellung des Bypasses 24, 25 bzw. die Stellung des Bypassventils 25 über eine Ventilhubmessung 34 zur Feinsteuerung ("fine-tuning") der Gasturbine 11 verwendet, wobei so korrigiert wird, dass das Bypassventil 25 auf Minimalhub ist.

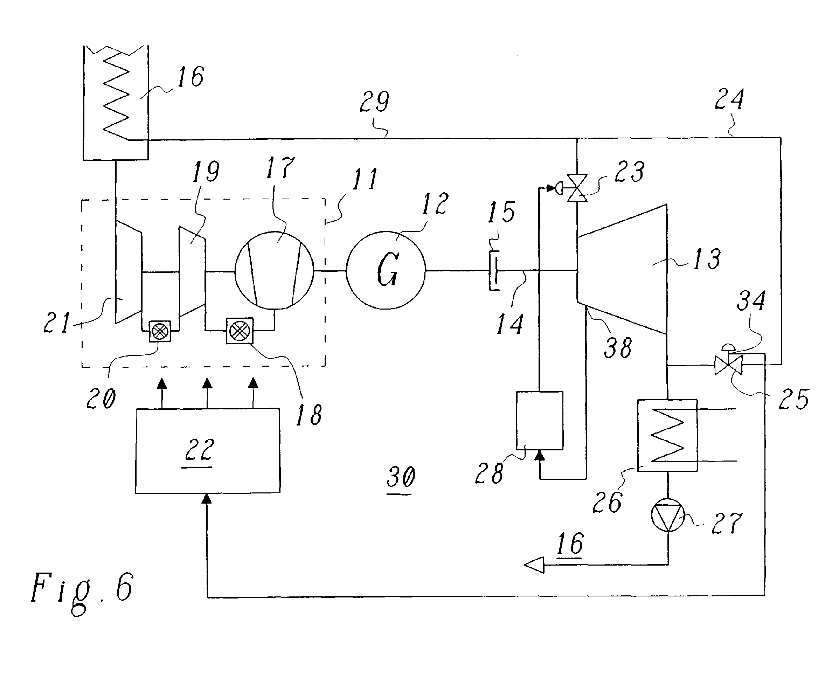

Bei einer dritten Realisierung gemäss Fig. 6 belastet sich die Dampfturbine 13 nach ihrem Hochfahrautomaten 28, während die Gasturbine 11 nur entsprechend der Stellung des Bypassventils 25 (Ventilhubmessung 34) belastet wird. Das Bypassventil 25 bleibt dabei immer auf Minimalhub, so dass nur eine minimale Dampfmenge verworfen wird.

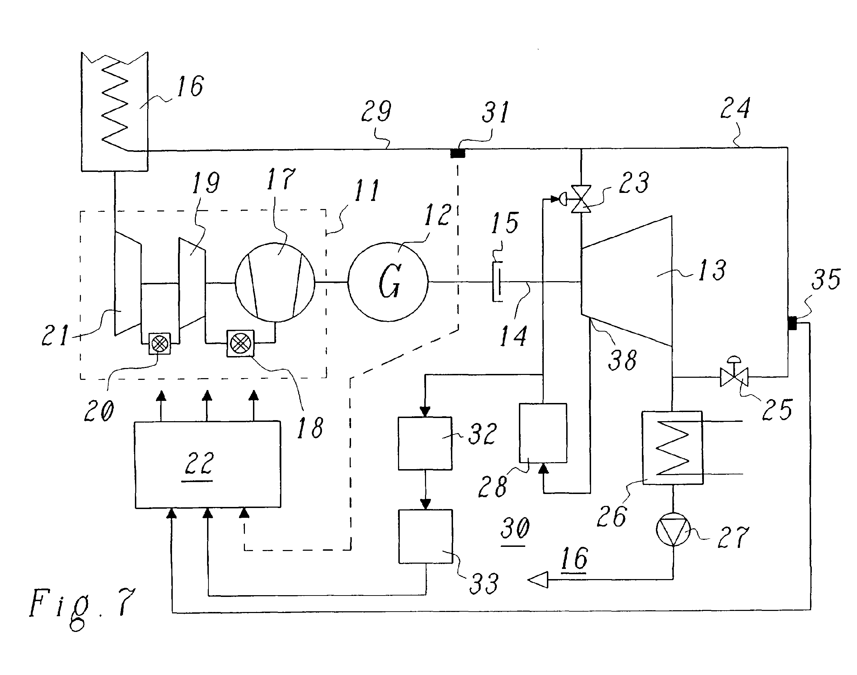

Eine vierte Realisierung gemäss Fig. 7 ist ähnlich wie die Anlage der Fig. 5. Statt der Stellung des Bypassventils 25 wird hier jedoch der Frischdampfdruck mittels eines Druckaufnehmers 35 gemessen, und dem Verlauf des Frischdampfdruckes entsprechend mit der Gasturbine 11 ein Sollverlauf nachgefahren. Der Dampfbypass 24, 25 bleibt dabei zu. Der Sollverlauf des Frischdampfdruckes kann dabei insbesondere vom Belastungsgradienten des Abhitzekessels 16 abhängig sein.

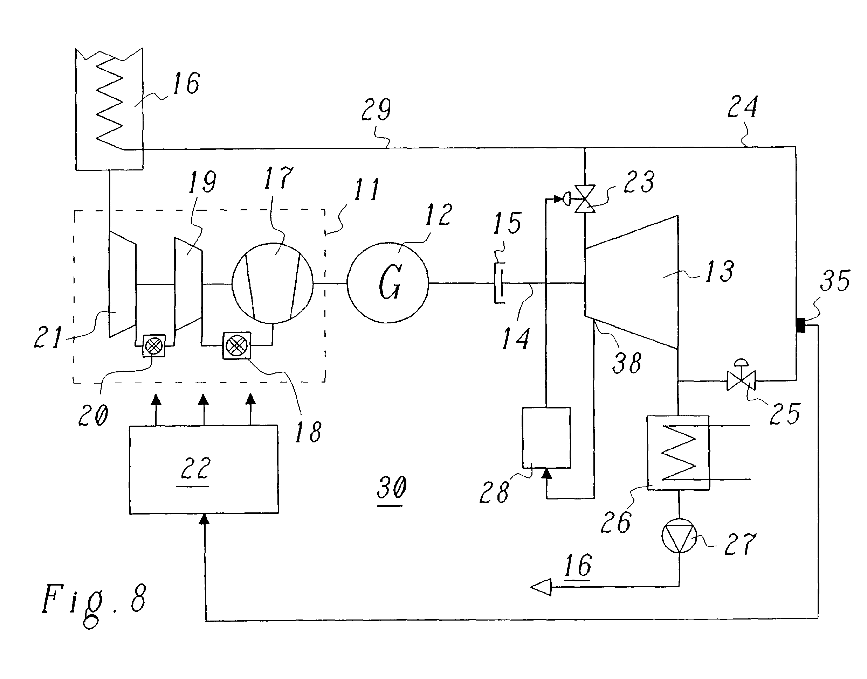

Bei einer fünften Realisierung gemäss Fig. 8, die ähnlich Fig. 6 ist, belastet sich die Dampfturbine 13 nach ihrem Hochfahrautomaten 28, während die Gasturbine 11 so gefahren wird, dass sie einem Sollverlauf des Dampfdruckes nachfährt, der mittels des Druckaufnehmers 35 gemessen wird.

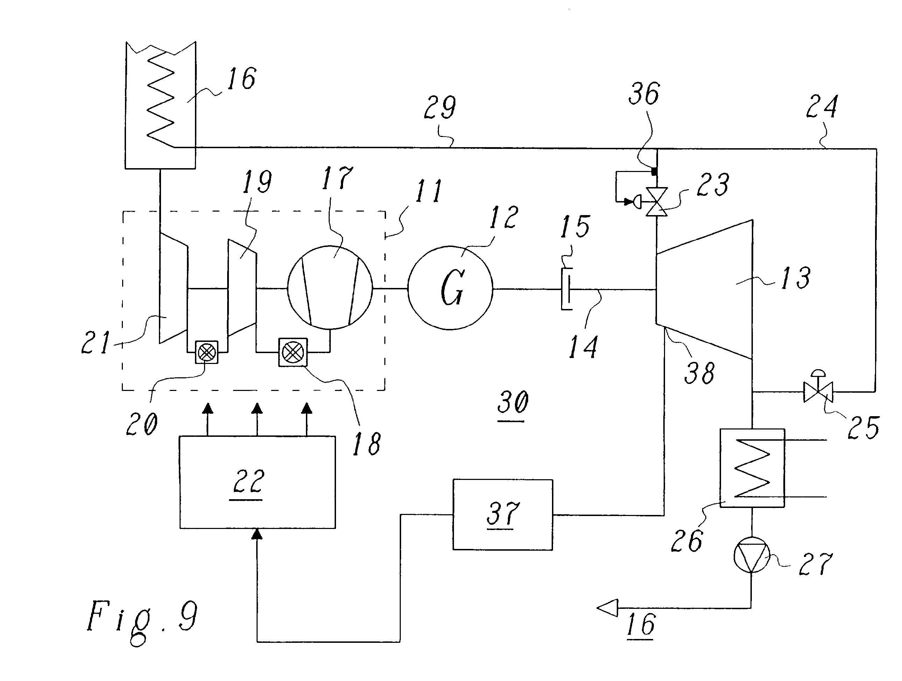

Schliesslich lässt sich gemäss Fig. 9 durch Einsparen des Hochfahrautomaten im Rahmen der Erfindung ein vereinfachtes Hochfahren der Anlage verwirklichen: Anhand einer Flanschtemperaturmessung 38 an der Dampfturbine 13 (oder einer anderen Zustandsgrösse der Dampfturbine 13) vor dem Start fährt die Gasturbine entlang einer Belastungskurve hoch, so dass die Dampfturbine von den Anfahrspannungen her nicht überlastet wird und die ganze Dampfproduktion von der Dampfturbine 13 geschluckt wird. Ab der Startfreigabe der Dampfturbine 13 regelt diese den Verlauf des Frischdampfdruckes (Frischdampfventil 23 mit Druckaufnehmer 36), während die Gasturbine 11 einer voreingestellten Belastungskurve folgt, die von einem Kurvengeber 37 nach Massgabe der vorher gemessenen Flanschtemperatur ausgegeben wird. Der Dampfbypass 24, 25 bleibt dabei zu.

Insgesamt ergibt sich mit der Erfindung eine Betriebsweise für das Hochfahren von Kombianlagen, die sich durch eine Minimum an verworfenem Frischdampf auszeichnet. Obgleich die Startzeit nicht beeinflusst wird, wird dadurch weniger Brennstoff verbraucht, wodurch sich geringere Startkosten und eine verringerte Umweltbelastung ergeben.

### BEZUGSZEICHENLISTE

- 10,30: Kombikraftwerk (Kombianlage)
- 11: Gasturbine (GT)
- 12: Generator
- 13: Dampfturbine (DT)
- 14: Welle
- 15: Kupplung
- 16: Abhitzekessel (HRSG)
- 17: Kompressor
- 18,20: Brennkammer
- 19,21: Turbinenstufe
- 22: Steuerung (Gasturbine)
- 23: Frischdampfventil
- 24: Bypassleitung
- 25: Bypassventil
- 26: Kondenser
- 27: Kondensatpumpe
- 28: Hochfahrautomat (Dampfturbine)
- 29: Frischdampfleitung
- 31: Temperaturaufnehmer
- 32: Funktionsblock Δm(ΔP_{DT})
- 33: Funktionsblock ΔP_{GT}(Δm)
- 34: Ventilhubmessung
- 35,36: Druckaufnehmer
- 37: Kurvengeber
- 38: Flanschtemperaturmessung
- n_{GT}: Drehzahl (Gasturbine)
- P_{GT}: Leistung (Gasturbine)
- P_{DT}: Leistung (Dampfturbine)
- SBF: Dampfbypass-Massenstrom

## Patentansprüche

1. Verfahren zum Hochfahren eines Kombikraftwerkes (30), welches wenigstens eine Gasturbine (11) und eine Dampfturbine (13) umfasst, wobei mittels der heissen Abgase der Gasturbine (11) in einem Abhitzekessel (16) Frischdampf für den Betrieb der Dampfturbine (13) erzeugt und der Dampfturbine (13) zugeleitet und überschüssiger Frischdampf über einen steuerbaren Bypass (24, 25) an der Dampfturbine (13) vorbei direkt zu einem Kondenser (26) geleitet wird, dadurch gekennzeichnet, dass zur Verringerung des über den Bypass (24, 25) strömenden Dampfüberschusses die Gasturbine (11) zunächst auf ihre Minimallast hochgefahren wird, und dass die Gasturbine (11) anschliessend mit einem Lastgradienten weiter hochgefahren wird, welcher durch Zustandsgrössen der Dampfturbine (13) bestimmt wird.

2. Verfahren nach Anspruch 1, dadurch gekennzeichnet, dass die Dampfturbine (13) mittels eines Hochfahrautomaten (28) hochgefahren wird, welcher nach Massgabe des jeweiligen Belastungszustandes bzw. Belastungsgradienten der Dampfturbine (13) ein Leistungssteigerungssignal (ΔP_{DT}) für die Dampfturbine (13) abgibt, dass aus dem Leistungssteigerungssignal (ΔP_{DT}) die für die Leistungssteigerung erforderliche zusätzliche Dampfmenge (Δm) abgeleitet wird, dass aus der bestimmten zusätzlichen Dampfmenge (Δm) ein für deren Erzeugung erforderliches Leistungssteigerungssignal (ΔP_{GT}) der Gasturbine (11) abgeleitet wird, und dass die Gasturbine (11) nach Massgabe dieses Gasturbinen-Leistungssteigerungssignals (ΔP_{GT}) hochgefahren wird.

3. Verfahren nach Anspruch 2, dadurch gekennzeichnet, dass beim Hochfahren der Gasturbine (11) vorhandene Druckbegrenzungen für den Abhitzekessel (16) und/oder Temperaturbegrenzungen für den Abhitzekessel (16) und/oder die Dampfturbine (13) berücksichtigt werden.

4. Verfahren nach Anspruch 3, dadurch gekennzeichnet, dass die für die vorliegenden Dampfdaten erforderlichen optimalen Abgastemperaturen und Abgas-Massenströme der Gasturbine (11) sowohl durch die Steuerung der Brennstoffmenge zur Brennkammer bzw. den Brennkammern (18, 20) der Gasturbine (11) als auch durch die Beeinflussung der Leitschaufelstellung der Gasturbine (11) eingestellt werden.

5. Verfahren nach einem der Ansprüche 2 bis 4, dadurch gekennzeichnet, dass zusätzlich die Stellung des Bypass (24, 25) für die Feinsteuerung der Gasturbine (11) verwendet wird, wobei die Feinsteuerung der Gasturbine (11) so erfolgt, dass ein im Bypass angeordnetes Bypassventil (25) stets einen minimalen Oeffnungshub aufweist.

6. Verfahren nach einem der Ansprüche 2 bis 4, dadurch gekennzeichnet, dass der Bypass (24, 25) geschlossen gehalten wird, und dass die Steuerung der Gasturbine (11) entlang einem Sollverlauf nach Massgabe des Frischdampfdruckes erfolgt.

7. Verfahren nach Anspruch 6, dadurch gekennzeichnet, dass der Frischdampfdruck-Sollverlauf vom Belastungsgradienten des Abhitzekessels (16) abhängig ist.

8. Verfahren nach Anspruch 1, dadurch gekennzeichnet, dass die Dampfturbine (13) mittels eines Hochfahrautomaten (28) hochgefahren wird, welcher nach Massgabe des jeweiligen Belastungszustandes bzw. Belastungsgradienten der Dampfturbine (13) ein Leistungssteigerungssignal (ΔP_{DT}) für die Dampfturbine (13) abgibt, und dass die Gasturbine (11) nur entsprechend der Stellung des Bypass (24, 25) belastet wird, wobei das im Bypass angeordnetes Bypassventil (25) stets einen minimalen Oeffnungshub aufweist.

9. Verfahren nach Anspruch 1, dadurch gekennzeichnet, dass die Dampfturbine (13) mittels eines Hochfahrautomaten (28) hochgefahren wird, welcher nach Massgabe des jeweiligen Belastungszustandes bzw. Belastungsgradienten der Dampfturbine (13) ein Leistungssteigerungssignal (ΔP_{DT}) für die Dampfturbine (13) abgibt, und dass die Steuerung der Gasturbine (11) entlang einem Sollverlauf nach Massgabe des Frischdampfdruckes erfolgt.

10. Verfahren nach Anspruch 1, dadurch gekennzeichnet, dass Vor dem Start der Dampfturbine (13) eine Zustandsgrösse, insbesondere die Flanschtemperatur, der Dampfturbine (13) gemessen wird, und dass die Gasturbine (11) nach Massgabe dieser Zustandsgrösse entlang einer solchen vorgegebenen Belastungskurve hochgefahren wird, dass die Dampfturbine (13) von den Anfahrspannungen her nicht überlastet wird und der gesamte Frischdampf von der Dampfturbine (13) geschluckt wird.

11. Kombikraftwerk zur Durchführung des Verfahrens nach Anspruch 1, dadurch gekennzeichnet, dass für das Hochfahren bzw. den Betrieb der Gasturbine (11) eine Steuerung (22) vorgesehen ist, dass erste Mittel (28, 31, 34, 35, 38) zur Messung und Auswertung von Zustandsgrössen der Dampfturbine (13) und/oder des mit der Dampfturbine (13) verbundenen Dampfkreislaufes (24, 25, 29) vorgesehen sind, und dass die Steuerung (22) der Gasturbine (11) eingangsseitig mit den Mess- und Auswertemitteln (28, 31, 34, 35, 38) in Wirkverbindung steht.

12. Kombikraftwerk nach Anspruch 11, dadurch gekennzeichnet, dass die ersten Mess- und Auswertemittel einen Hochfahrautomaten (28) für die Dampfturbine (13) umfassen, auf welchen eingangsseitig als Zustandsgrösse die Flanschtemperatur der Dampfturbine (13) gegeben wird, und welcher ausgangsseitig ein Leistungssteigerungssignal (ΔP_{DT}) für die Dampfturbine (13) abgibt, und dass der Ausgang des Hochfahrautomaten (28) über Funktionsblöcke (32, 33) mit dem Eingang der Gasturbinen-Steuerung (22) verbunden ist, welche Funktionsblöcke dem Leistungssteigerungssignal (ΔP_{DT}) für die Dampfturbine (13) nach vorgegebenen Funktionen ein entsprechendes Leistungssteigerungssignal (ΔP_{GT}) für die Gasturbine (11) zuordnen.

13. Kombikraftwerk nach Anspruch 12, dadurch gekennzeichnet, dass eine Temperaturaufnehmer (31) zur Messung der Temperatur des Frischdampfes vorgesehen ist, und dass der Temperaturaufnehmer (31) mit dem Eingang der Gasturbinen-Steuerung (22) verbunden ist.

14. Kombikraftwerk nach einem der Ansprüche 12 und 13, dadurch gekennzeichnet, dass ein Druckaufnehmer (35) zur Messung des Druckes des Frischdampfes vorgesehen ist, und dass der Druckaufnehmer (35) mit dem Eingang der Gasturbinen-Steuerung (22) verbunden ist.

15. Kombikraftwerk nach einem der Ansprüche 12 und 13, dadurch gekennzeichnet, dass im Bypass (24, 25) der Dampfturbine (13) ein Bypassventil (25) angeordnet ist, dass zweite Mittel zur Messung des Ventilhubes des Bypassventils (25) vorgesehen sind, und dass die zweiten Mittel mit dem Eingang der Gasturbinen-Steuerung (22) in verbunden sind.

16. Kombikraftwerk nach Anspruch 11, dadurch gekennzeichnet, dass die ersten Mess- und Auswertemittel einen Hochfahrautomaten (28) für die Dampfturbine (13) umfassen, auf welchen eingangsseitig als Zustandsgrösse die Flanschtemperatur der Dampfturbine (13) gegeben wird, und welcher ausgangsseitig ein Leistungssteigerungssignal (ΔP_{DT}) für die Dampfturbine (13) zur Steuerung eines Frischdampfventils (23) abgibt, dass im Bypass (24, 25) der Dampfturbine (13) ein Bypassventil (25) angeordnet ist, dass zweite Mittel zur Messung des Ventilhubes des Bypassventils (25) vorgesehen sind, und dass die zweiten Mittel mit dem Eingang der Gasturbinen-Steuerung (22) in verbunden sind.

17. Kombikraftwerk nach Anspruch 11, dadurch gekennzeichnet, dass die ersten Mess- und Auswertemittel einen Hochfahrautomaten (28) für die Dampfturbine (13) umfassen, auf welchen eingangsseitig als Zustandsgrösse die Flanschtemperatur der Dampfturbine (13) gegeben wird, und welcher ausgangsseitig ein Leistungssteigerungssignal (ΔP_{DT}) für die Dampfturbine (13) zur Steuerung eines Frischdampfventils (23) abgibt, dass ein Druckaufnehmer (35) zur Messung des Druckes des Frischdampfes vorgesehen ist, und dass der Druckaufnehmer (35) mit dem Eingang der Gasturbinen-Steuerung (22) verbunden ist.

18. Kombikraftwerk nach Anspruch 11, dadurch gekennzeichnet, dass die ersten Mittel zur Messung der Flanschtemperatur der Dampfturbine (13) ausgelegt sind, und dass die ersten Mittel über einen Kurvengeber (37) mit der Gasturbinen-Steuerung (22) in Wirkverbindung stehen, welcher Kurvengeber (37) nach Massgabe einer eingegebenen, beim Start der Dampfturbine (13) vorliegenden Flanschtemperatur eine vorbestimmte Belastungskurve an die Gasturbinen-Steuerung (22) abgibt.
